# EUROPEAN PATENT APPLICATION

(11) **EP 4 629 597 A1**
(43) Date of publication of application: **08.10.2025**
(21) Application number: 23936481.3
(22) Date of filing: 20.12.2023
(51) Int. Cl.: H04L 67/104

(54) **DATA PROCESSING METHOD, SYSTEM AND APPARATUS FOR BLOCKCHAIN, AND COMPUTER DEVICE**

(30) Priority: 08.05.2023 CN 202310514973
(71) Applicant: Tencent Technology (Shenzhen) Company Limited, Shenzhen, Guangdong 518057 (CN)
(72) Inventor: ZHU, Gengliang, Shenzhen, Guangdong 518057 (CN)
(74) Representative: Nederlandsch Octrooibureau
(86) International application number: PCT/CN2023/140150
(87) International publication number: WO 2024/230177

(57) **Abstract**

This application relates to a data processing method and apparatus for a blockchain, a computer device, a storage medium, and a computer program product. The method may be applied to technical fields such as cloud technologies, cloud storage, and blockchain. The method includes: reading (operation 202) transaction data from a transaction message queue, the transaction data being transmitted by a service node in a service network to the transaction message queue through a proxy node; generating (operation 204) proposal information for a target block based on the transaction data, and transmitting the proposal information to a consensus message queue to cause second consensus nodes of the consensus network to read the proposal information from the consensus message queue, the proposal information being configured for instructing consensus nodes in the consensus network to perform consensus on the target block, and the consensus nodes performing consensus data interaction through the consensus message queue in a consensus process; and transmitting (operation 206), in a case that the consensus nodes reach consensus concerning the target block, the target block to a data message queue to cause the service node to read the target block from the data message queue.

## Description

### RELATED APPLICATION

This application claims priority to Chinese Patent Application No. 2023105149736, filed with the China National Intellectual Property Administration on May 8, 2023 and entitled "DATA PROCESSING METHOD, SYSTEM, AND APPARATUS FOR BLOCKCHAIN, AND COMPUTER DEVICE", which is incorporated herein by reference in its entirety.

### FIELD OF THE TECHNOLOGY

This application relates to the technical field of blockchain, and in particular, to a data processing method, system, and apparatus for a blockchain, a computer device, a storage medium, and a computer program product.

### BACKGROUND OF THE DISCLOSURE

With the development of Internet technology, blockchains have received increasing attention. The blockchain is a new application mode of computer technologies such as distributed data storage, peer to peer (P2P) transmission, a consensus mechanism, and an encryption algorithm. Essentially, it is a decentralized database. A network formed based on the blockchain and a P2P network may be referred to as a blockchain network, and the blockchain network usually includes a plurality of nodes.

In the related art, data communication may be performed between nodes in the blockchain network in a P2P manner. However, communication connections among a plurality of nodes are complex, resulting in a relatively high delay of data transmission and a relatively low response speed of the blockchain network.

### SUMMARY

According to various embodiments provided in this application, a data processing method, system, and apparatus for a blockchain, a computer device, a computer-readable storage medium, and a computer program product are provided.

In a first aspect, this application provides a data processing method for a blockchain, performed by a first consensus node of a consensus network, and including:
reading transaction data from a transaction message queue, the transaction data being transmitted by a service node in a service network to the transaction message queue through a proxy node; generating proposal information for a target block based on the transaction data, and transmitting the proposal information to a consensus message queue to cause second consensus nodes of the consensus network to read the proposal information from the consensus message queue, the proposal information being configured for instructing consensus nodes in the consensus network to perform consensus on the target block, the consensus nodes performing consensus data interaction through the consensus message queue in a consensus process, and the consensus nodes including the first consensus node and the second consensus nodes; and transmitting, in a case that the consensus nodes reach consensus concerning the target block, the target block to a data message queue to cause the service node to read the target block from the data message queue.

In a second aspect, this application further provides a data processing apparatus for a blockchain, including:
a first transaction message queue interaction module configured to read transaction data from a transaction message queue, the transaction data being transmitted by a service node in a service network to the transaction message queue through a proxy node;
a consensus message queue interaction module configured to generate proposal information for a target block based on the transaction data, and transmit the proposal information to a consensus message queue to cause second consensus nodes of the consensus network to read the proposal information from the consensus message queue, the proposal information being configured for instructing consensus nodes in the consensus network to perform consensus on the target block, the consensus nodes performing consensus data interaction through the consensus message queue in a consensus process, and the consensus nodes including a first consensus node and the second consensus nodes; and
a first data message queue interaction module configured to transmit, in a case that the consensus nodes reach consensus concerning the target block, the target block to a data message queue to cause the service node to read the target block from the data message queue.

In a third aspect, this application further provides a computer device. The computer device includes a memory and a processor. The memory has a computer program stored therein, and the processor, when executing the computer program, implements the following operations:
reading transaction data from a transaction message queue, the transaction data being transmitted by a service node in a service network to the transaction message queue through a proxy node; generating proposal information for a target block based on the transaction data, and transmitting the proposal information to a consensus message queue to cause second consensus nodes of the consensus network to read the proposal information from the consensus message queue, the proposal information being configured for instructing consensus nodes in the consensus network to perform consensus on the target block, the consensus nodes performing consensus data interaction through the consensus message queue in a consensus process, and the consensus nodes including a first consensus node and the second consensus nodes; and transmitting, in a case that the consensus nodes reach consensus concerning the target block, the target block to a data message queue to cause the service node to read the target block from the data message queue.

In a fourth aspect, this application further provides a computer-readable storage medium. The computer-readable storage medium has a computer program stored therein, and the computer program, when executed by a processor, implements the following operations:
reading transaction data from a transaction message queue, the transaction data being transmitted by a service node in a service network to the transaction message queue through a proxy node; generating proposal information for a target block based on the transaction data, and transmitting the proposal information to a consensus message queue to cause second consensus nodes of the consensus network to read the proposal information from the consensus message queue, the proposal information being configured for instructing consensus nodes in the consensus network to perform consensus on the target block, the consensus nodes performing consensus data interaction through the consensus message queue in a consensus process, and the consensus nodes including a first consensus node and the second consensus nodes; and transmitting, in a case that the consensus nodes reach consensus concerning the target block, the target block to a data message queue to cause the service node to read the target block from the data message queue.

In a fifth aspect, this application further provides a computer program product. The computer program product includes a computer program, and the computer program, when executed by a processor, implements the following operations:
reading transaction data from a transaction message queue, the transaction data being transmitted by a service node in a service network to the transaction message queue through a proxy node; generating proposal information for a target block based on the transaction data, and transmitting the proposal information to a consensus message queue to cause second consensus nodes of the consensus network to read the proposal information from the consensus message queue, the proposal information being configured for instructing consensus nodes in the consensus network to perform consensus on the target block, the consensus nodes performing consensus data interaction through the consensus message queue in a consensus process, and the consensus nodes including a first consensus node and the second consensus nodes; and transmitting, in a case that the consensus nodes reach consensus concerning the target block, the target block to a data message queue to cause the service node to read the target block from the data message queue.

In a sixth aspect, this application provides a data processing method for a blockchain, performed by a proxy node of a consensus network, and including the following operations:
acquiring transaction data transmitted by a service node; transmitting the transaction data to a transaction message queue to cause a first consensus node in a consensus network to read the transaction data from the transaction message queue; generating proposal information for a target block based on the transaction data, and transmitting the proposal information to a consensus message queue to cause second consensus nodes of the consensus network to read the proposal information from the consensus message queue, the proposal information being configured for instructing consensus nodes in the consensus network to perform consensus on the target block, and the consensus nodes performing consensus data interaction through the consensus message queue in a consensus process; and transmitting, in a case that the consensus nodes reach consensus concerning the target block, the target block to a data message queue, the consensus nodes including the first consensus node and the second consensus nodes; and reading the target block from the data message queue, and transmitting the target block to the service node.

In a seventh aspect, this application further provides a data processing apparatus for a blockchain, including:
a transaction data acquisition module configured to acquire transaction data transmitted by a service node;
a second transaction message queue interaction module configured to transmit the transaction data to a transaction message queue to cause a first consensus node in a consensus network to read the transaction data from the transaction message queue; generate proposal information for a target block based on the transaction data, and transmit the proposal information to a consensus message queue to cause second consensus nodes of the consensus network to read the proposal information from the consensus message queue, the proposal information being configured for instructing consensus nodes in the consensus network to perform consensus on the target block, and the consensus nodes performing consensus data interaction through the consensus message queue in a consensus process; and transmit, in a case that the consensus nodes reach consensus concerning the target block, the target block to a data message queue, the consensus nodes including the first consensus node and the second consensus nodes; and
a second data message queue interaction module configured to read the target block from the data message queue, and transmit the target block to the service node.

In an eighth aspect, this application further provides a computer device. The computer device includes a memory and a processor. The memory has a computer program stored therein, and the processor, when executing the computer program, implements the following operations:
acquiring transaction data transmitted by a service node; transmitting the transaction data to a transaction message queue to cause a first consensus node in a consensus network to read the transaction data from the transaction message queue; generating proposal information for a target block based on the transaction data, and transmitting the proposal information to a consensus message queue to cause second consensus nodes of the consensus network to read the proposal information from the consensus message queue, the proposal information being configured for instructing consensus nodes in the consensus network to perform consensus on the target block, and the consensus nodes performing consensus data interaction through the consensus message queue in a consensus process; and transmitting, in a case that the consensus nodes reach consensus concerning the target block, the target block to a data message queue, the consensus nodes including the first consensus node and the second consensus nodes; and reading the target block from the data message queue, and transmitting the target block to the service node.

In a ninth aspect, this application further provides a computer-readable storage medium. The computer-readable storage medium has a computer program stored therein, and the computer program, when executed by a processor, implements the following operations:
acquiring transaction data transmitted by a service node; transmitting the transaction data to a transaction message queue to cause a first consensus node in a consensus network to read the transaction data from the transaction message queue; generating proposal information for a target block based on the transaction data, and transmitting the proposal information to a consensus message queue to cause second consensus nodes of the consensus network to read the proposal information from the consensus message queue, the proposal information being configured for instructing consensus nodes in the consensus network to perform consensus on the target block, and the consensus nodes performing consensus data interaction through the consensus message queue in a consensus process; and transmitting, in a case that the consensus nodes reach consensus concerning the target block, the target block to a data message queue, the consensus nodes including the first consensus node and the second consensus nodes; and reading the target block from the data message queue, and transmitting the target block to the service node.

In a tenth aspect, this application further provides a computer program product. The computer program product includes a computer program, and the computer program, when executed by a processor, implements the following operations:
acquiring transaction data transmitted by a service node; transmitting the transaction data to a transaction message queue to cause a first consensus node in a consensus network to read the transaction data from the transaction message queue; generating proposal information for a target block based on the transaction data, and transmitting the proposal information to a consensus message queue to cause second consensus nodes of the consensus network to read the proposal information from the consensus message queue, the proposal information being configured for instructing consensus nodes in the consensus network to perform consensus on the target block, and the consensus nodes performing consensus data interaction through the consensus message queue in a consensus process; and transmitting, in a case that the consensus nodes reach consensus concerning the target block, the target block to a data message queue, the consensus nodes including the first consensus node and the second consensus nodes; and reading the target block from the data message queue, and transmitting the target block to the service node.

In an eleventh aspect, this application further provides a data processing system for a blockchain, including a service node in a service network, a proxy node, and a first consensus node and second consensus nodes of the consensus network;
the service node being configured to transmit transaction data to the proxy node;
the proxy node being configured to acquire the transaction data, and transmit the transaction data to a transaction message queue;
the first consensus node being configured to read the transaction data from the transaction message queue, generate proposal information for a target block based on the transaction data, and transmit the proposal information to a consensus message queue to cause the second consensus nodes of the consensus network to read the proposal information from the consensus message queue, the proposal information being configured for instructing consensus nodes in the consensus network to perform consensus on the target block, and the consensus nodes performing consensus data interaction through the consensus message queue in a consensus process; and transmit, in a case that the consensus nodes reach consensus concerning the target block, the target block to a data message queue, the consensus nodes including the first consensus node and the second consensus nodes; and
the proxy node being further configured to read the target block from the data message queue, and transmit the target block to the service node.

Details of one or more embodiments of this application are provided in the accompanying drawings and descriptions below. Other features, objectives, and advantages of this application become clear from the specification, accompanying drawings, and claims.

### BRIEF DESCRIPTION OF THE DRAWINGS

To describe technical solutions in embodiments of this application more clearly, accompanying drawings required for describing the embodiments are briefly described below. Clearly, the accompanying drawings described below are merely exemplary embodiments of this application, and a person skilled in the art may further obtain other drawings according to these drawings without involving any inventive effort.
FIG. 1 is a diagram of an application environment of a data processing method for a blockchain according to an embodiment.
FIG. 2 is a schematic flowchart of a data processing method for a blockchain according to an embodiment.
FIG. 3 is a schematic diagram of service nodes in a service network according to an embodiment.
FIG. 4 is a schematic diagram of consensus nodes in a consensus network according to an embodiment.
FIG. 5 is a schematic diagram of interaction among consensus nodes and a consensus message queue according to an embodiment.
FIG. 6 is a schematic diagram of interaction among a service node, a proxy node, and consensus nodes through a transaction message queue, a consensus message queue, and a data message queue according to an embodiment.
FIG. 7 is a schematic diagram of synchronizing a target block through a data node according to an embodiment.
FIG. 8 is a schematic flowchart of a data processing method for a blockchain according to another embodiment.
FIG. 9 is a schematic flowchart of a data processing method for a blockchain according to yet another embodiment.
FIG. 10 is a schematic flowchart of a data processing method for a blockchain according to yet another embodiment.
FIG. 11 is a schematic diagram of a data processing method for a blockchain applied to an electronic bill scene according to an embodiment.
FIG. 12 is a schematic structural diagram of a data processing system for a blockchain according to an embodiment.
FIG. 13 is a structural block diagram of a data processing apparatus for a blockchain according to an embodiment.
FIG. 14 is a structural block diagram of a data processing apparatus for a blockchain according to another embodiment.
FIG. 15 is a diagram of an internal structure of a computer device according to an embodiment.

### DESCRIPTION OF EMBODIMENTS

To make the objectives, technical solutions, and advantages of this application clearer, this application is further described in detail below in conjunction with the accompanying drawings and embodiments. The specific embodiments described herein are for the sole purpose of explaining this application and are not intended to limit this application.

In the specification and accompanying drawings, operations and elements that are basically the same or similar are represented by the same or similar reference signs, and repeated descriptions of these operations and elements are omitted. Meanwhile, in descriptions of this application, terms such as "first" and "second" are merely used for a distinguishing purpose, and cannot be understood as indicating or implying relative importance or a sequence.

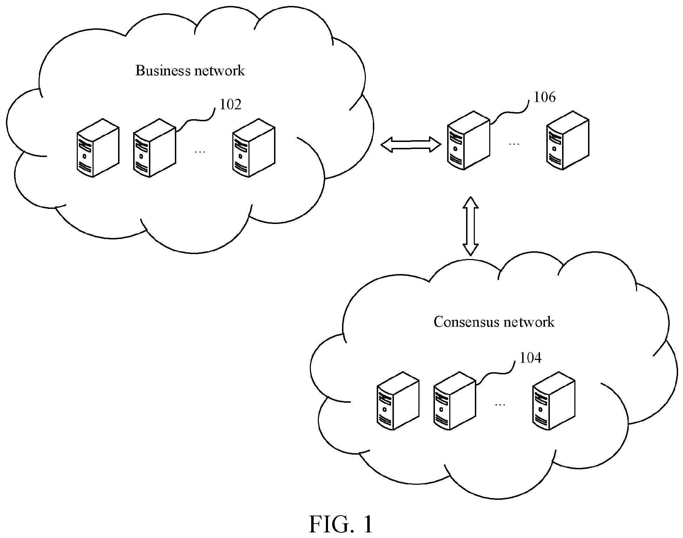

A data processing method for a blockchain provided in embodiments of this application may be applied to an application environment shown in FIG. 1. A blockchain network includes a service network and a consensus network. A service node 102 is located in the service network, a first consensus node 104 and a second consensus node 106 are located in the consensus network, and the service network and the consensus network interact through a proxy node 108. The data processing method for a blockchain may be performed by the service node 102, the first consensus node 104, the second consensus node 106, or the proxy node 108, or may be collaboratively performed by the service node 102, the first consensus node 104, the second consensus node 106, and the proxy node 108.

An example in which the data processing method for a blockchain is performed by the first consensus node 104 is used, and the first consensus node 104 may read transaction data from a transaction message queue. The transaction data is transmitted by the service node 102 in the service network to the transaction message queue through the proxy node 108. The first consensus node 104 may generate proposal information for a target block based on the transaction data. The proposal information is configured for instructing consensus nodes in the consensus network to perform consensus on the target block, and the consensus nodes perform consensus data interaction through a consensus message queue in a consensus process. The first consensus node 104 may further transmit, in a case that the consensus nodes reach consensus concerning the target block, the target block to a data message queue to cause the service node 102 to read the target block from the data message queue.

The service node 102, the first consensus node 104, the second consensus node 106, and the proxy node 108 each may be an independent physical server or may be a service node in a blockchain system. A P2P network is formed between service nodes in the blockchain system. A P2P protocol is an application-layer protocol running over a transmission control protocol (TCP).

In addition, the service node 102, the first consensus node 104, the second consensus node 106, and the proxy node 108 may be server clusters including a plurality of physical servers, or may be cloud servers providing basic cloud computing services such as a cloud service, a cloud database, cloud computing, a cloud function, cloud storage, a network service, cloud communication, a middleware service, a domain name service, a security service, a content delivery network (CDN), a big data and artificial intelligence platform.

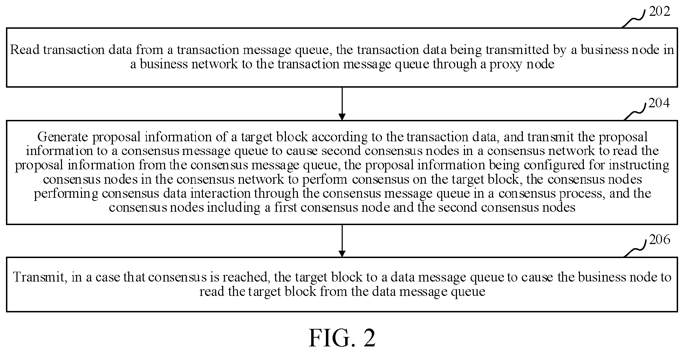

In some embodiments, as shown in FIG. 2, a data processing method for a blockchain is provided. The method is performed by the service node, the proxy node, the first consensus node, or the second consensus node in FIG. 1 or may be collaboratively performed by the service node, the proxy node, the first consensus node, and the second consensus node. An example in which the method is performed by the first consensus node in FIG. 1 is used for description, and the method includes the following operations.

Operation 202: Read transaction data from a transaction message queue, the transaction data being transmitted by a service node in a service network to the transaction message queue through a proxy node.

The service node is deployed in a service network in a public network, the first consensus node is deployed in a consensus network of a private cloud, and the proxy node is configured for forwarding interaction data between the service network and the consensus network. The service network and the consensus network are layered through the proxy node to form a layered blockchain network architecture. The layered blockchain network architecture makes the consensus node in the private cloud more secure.

The service network includes a plurality of service nodes, and the service node transmitting the transaction data may be any one of the plurality of service nodes. The service node may be a simplified payment verification (SPV) node. The SPV node generally only stores a block header and transaction data associated with the node, but does not store complete blockchain data.

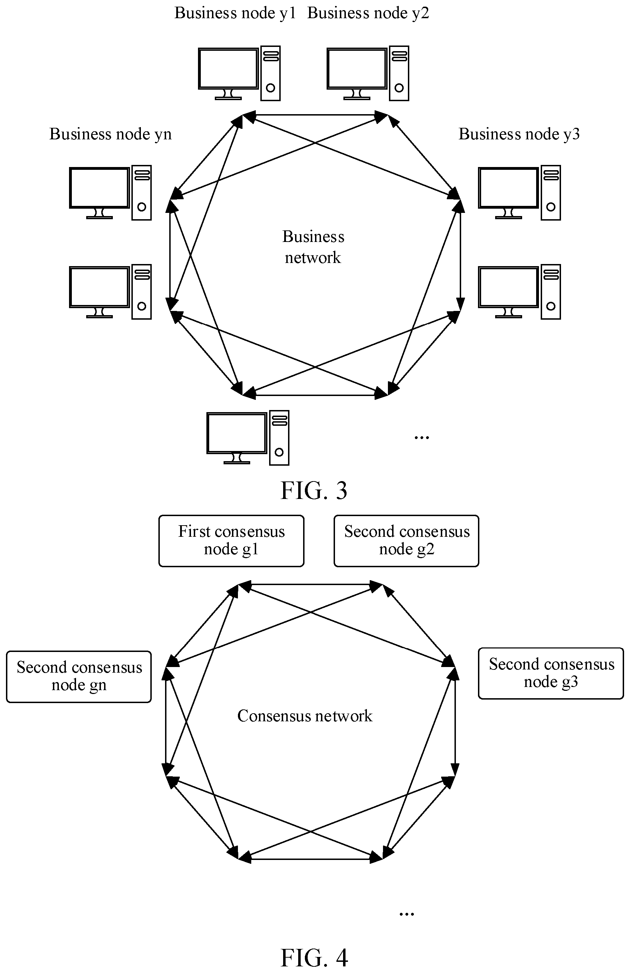

Illustratively, as shown in FIG. 3, the service nodes in the service network include a service node y1, a service node y2, ..., and a service node yn. The service node y1 transmits transaction data to a proxy node.

The transaction data is data on which consensus verification by the blockchain network has not been performed. The transaction data may be data corresponding to at least one transaction, for example, logistics data, bill data, or commodity transaction data.

A transaction message queue is a message queue of a distributed message center and is configured for storing the transaction data. The proxy node and the consensus node may perform data interaction with the transaction message queue. The transaction message queue may be a one-way write message queue or a one-way read message queue. That is, the transaction data in the transaction message queue is written by the proxy node and read by the first consensus node. In actual application, the distributed message center is alternatively referred to as a streaming message center.

In some embodiments, the consensus network includes a plurality of consensus nodes. A first consensus node reading the transaction data from the transaction message queue may be any one of the plurality of consensus nodes. The first consensus node may be a fixed consensus node selected from the plurality of consensus nodes, the plurality of consensus nodes may be used as first consensus nodes in turn, or some of the plurality of consensus nodes may be used as first consensus nodes in turn. In actual application, the first consensus node reading the transaction data from the transaction message queue is alternatively referred to as a first consensus node.

Illustratively, as shown in FIG. 4, consensus nodes in the consensus network include a first consensus node g1, a second consensus node g2, a second consensus node g3,..., and a second consensus node gn. The first consensus node g1 reads transaction data from a transaction message queue.

In some embodiments, when the service node needs to upload transaction data to the blockchain network, the service node transmits the transaction data to the proxy node, and the proxy node transmits the transaction data to the transaction message queue. When the transaction data is transmitted to the transaction message queue, the first consensus node reads the transaction data from the transaction message queue.

In some embodiments, the first consensus node periodically transmits a data read request to a distributed message center. When the proxy node transmits the transaction data to the transaction message queue, the first consensus node reads the transaction data from the transaction message queue based on the data read request. That is, the first consensus node actively pulls the transaction data from the transaction message queue.

In some embodiments, the first consensus node subscribes to the transaction message queue of the distributed message center. When the proxy node transmits the transaction data to the transaction message queue, the distributed message center pushes the transaction data to a consensus node that subscribes to the transaction message queue so that the first consensus node reads the transaction data from the transaction message queue.

Operation 204: Generate proposal information for a target block based on the transaction data, and transmit the proposal information to a consensus message queue to cause second consensus nodes of the consensus network to read the proposal information from the consensus message queue, the proposal information being configured for instructing consensus nodes in the consensus network to perform consensus on the target block, the consensus nodes performing consensus data interaction through the consensus message queue in a consensus process, and the consensus nodes including the first consensus node and the second consensus nodes.

The target block is block data corresponding to the transaction data, and the proposal information includes the target block. The proposal information is essentially a consensus verification request. That is, the first consensus node may generate a consensus verification request (proposal information) of the target block according to the transaction data and transmit the consensus verification request to the consensus message queue to instruct the second consensus nodes to read the consensus verification request from the consensus message queue. The consensus verification request is configured for instructing the consensus nodes to perform consensus on the target block and output respective consensus verification results. A consensus result of the target block may be determined according to the consensus verification results outputted by the consensus nodes.

The consensus message queue is a message queue of the distributed message center and is configured for storing data interacted by a plurality of consensus nodes. The consensus data is data interacted by a plurality of consensus nodes in a process of consensus on the target block.

The consensus nodes include all consensus nodes in the consensus network, that is, including the first consensus node and a plurality of second consensus nodes. Consensus on the target block needs the participation of the consensus nodes in the consensus network.

The consensus nodes perform consensus data interaction through the consensus message queue in the consensus process. That is, in the consensus process, the consensus nodes read, from the consensus message queue, consensus data transmitted by other consensus nodes, and after performing consensus verification on the target block based on the read consensus data, transmit consensus data generated by the consensus nodes to the consensus message queue. That is, the consensus message queue is equivalent to a data interaction platform of the consensus nodes.

In some embodiments, the first consensus node generates the proposal information of the target block according to the transaction data and transmits the proposal information to the consensus message queue. The first consensus node performs, in response to that the second consensus nodes read the proposal information from the consensus message queue, consensus on the target block according to the proposal information, and transmits consensus data generated by performing consensus to the consensus message queue. The first consensus node transmits, in response to the second consensus nodes, the generated consensus data to the consensus message queue, acquires the consensus data generated by the second consensus nodes from the consensus message queue, and continues to perform a subsequent operation of performing consensus on the target block according to the read consensus data. The consensus data generated by the second consensus node is obtained by the second consensus node performing consensus on the target block based on the proposal information and the consensus data generated by the first consensus node. In this way, the second consensus nodes read the proposal information from the consensus message queue, and the first consensus node and the second consensus nodes perform consensus data interaction through the consensus message queue in the consensus process.

Specifically, after the first consensus node transmits the proposal information to the consensus message queue, the consensus message queue transmits a proposal information push instruction to the second consensus nodes. The second consensus nodes read, in response to the proposal information push instruction, the proposal information from the consensus message queue. After reading the proposal information, the second consensus nodes transmit proposal information read completion instructions to the consensus message queue. The consensus message queue transmits the proposal information read completion instructions to the first consensus node. The first consensus node performs, in response to the proposal information read completion instructions, an operation of performing consensus on the target block and transmits consensus data generated by performing consensus to the consensus message queue. The consensus message queue transmits a first consensus data push instruction to the second consensus nodes. The second consensus nodes read, in response to the first consensus data push instruction, the consensus data transmitted by the first consensus node from the consensus message queue, performs consensus on the target block based on the proposal information and the consensus data transmitted by the first consensus node, and transmits the generated consensus data to the consensus message queue. The consensus message queue transmits a second consensus data push instruction to the first consensus node. The first consensus node reads consensus data generated by the second consensus nodes from the consensus message queue according to the second consensus data push instruction and continues to perform a subsequent operation of performing consensus on the target block according to the acquired consensus data.

**In** some embodiments, generating the proposal information of the target block according to the transaction data may be: packaging, by the first consensus node, the transaction data to obtain the target block, and generating the proposal information corresponding to the target block. Specifically, after packaging the transaction data to obtain the target block, the first consensus node determines block information of the target block based on block information on the blockchain and generates the proposal information based on the target block and the block information of the target block. The proposal information includes the target block. The block information may include a block height.

The first consensus node transmits the proposal information to the consensus message queue. The second consensus nodes of the consensus network may read the proposal information from the consensus message queue. The consensus nodes perform consensus on the target block in the proposal information according to the acquired proposal information. The first consensus node may further read the proposal information from the consensus message queue.

The consensus nodes transmit the consensus data generated in the consensus process to the consensus message queue so that the consensus nodes may acquire the consensus data from the consensus message queue. The consensus nodes perform consensus data interaction through the consensus message queue to complete the consensus on the target block, so as to obtain the consensus result.

The consensus nodes performing consensus on the target block based on the proposal information may be understood as a process in which the consensus nodes jointly verify the target block. The consensus result obtained by performing consensus on the target block may be that consensus is reached or consensus is not reached. When the consensus result of the target block is that consensus is reached, an upload operation may be performed on the target block. When the consensus result of the target block is that consensus is not reached, the upload operation is not performed on the target block.

The consensus nodes performing consensus on the target block based on the proposal information includes: outputting, by the consensus nodes, respective consensus verification results based on the proposal information, and determining the consensus result according to the consensus verification results of the consensus nodes. The consensus data in the consensus process includes the consensus verification results.

The consensus verification results outputted by the consensus nodes may be that the verification succeeds or the verification fails. The number of successful verification results and the number of failed verification results that are outputted by the consensus nodes are separately counted. When a majority of consensus nodes determine that the target block is successfully verified, it may be determined that the consensus result of the target block is that consensus is reached. When a majority of consensus nodes determine that the target block is not successfully verified, it may be determined that the consensus result of the target block is that consensus is not reached. Illustratively, a majority of consensus nodes may be more than 1/3 of all consensus nodes or more than 1/2 of all consensus nodes.

The consensus verification result outputted by the consensus node may be a probability value of reaching consensus. The probability value may be configured for reflecting a probability that the consensus node determines that the target block reaches consensus. A larger probability value indicates a higher probability that the consensus node determines that the target block reaches consensus. An average probability value is determined based on the probability values outputted by the consensus nodes, and the consensus result of the target block is determined according to the average probability value and a preset probability threshold. For example, when the average probability value is greater than the probability threshold, it is determined that the consensus result of the target block is that consensus is reached. When the average probability value is not greater than the probability threshold, it is determined that the consensus result of the target block is that consensus is not reached. Illustratively, the probability threshold may be 30% or 60%.

In addition, the foregoing manner of determining whether consensus is reached is merely an example. In actual application, the manner of determining whether consensus is reached may be set according to actual requirements.

In some embodiments, the consensus nodes may subscribe to the consensus message queue of the distributed message center to read the proposal information and the consensus data from the consensus message queue. For example, when the first consensus node transmits the proposal information to the consensus message queue, the distributed message center pushes the proposal information to the second consensus nodes so that the second consensus nodes read the proposal information. When a consensus node transmits the consensus data to the consensus message queue, the distributed message center pushes the consensus data to the consensus nodes so that the consensus nodes read the consensus data.

In some embodiments, the consensus nodes may periodically transmit a data read request to the distributed message center to read the proposal information and the consensus data from the consensus message queue. For example, when the first consensus node transmits the proposal information to the consensus message queue, the second consensus nodes read the proposal information from the consensus message queue according to the data read request. When a consensus node transmits the consensus data to the consensus message queue, the consensus nodes read the consensus data from the consensus message queue according to the data read request.

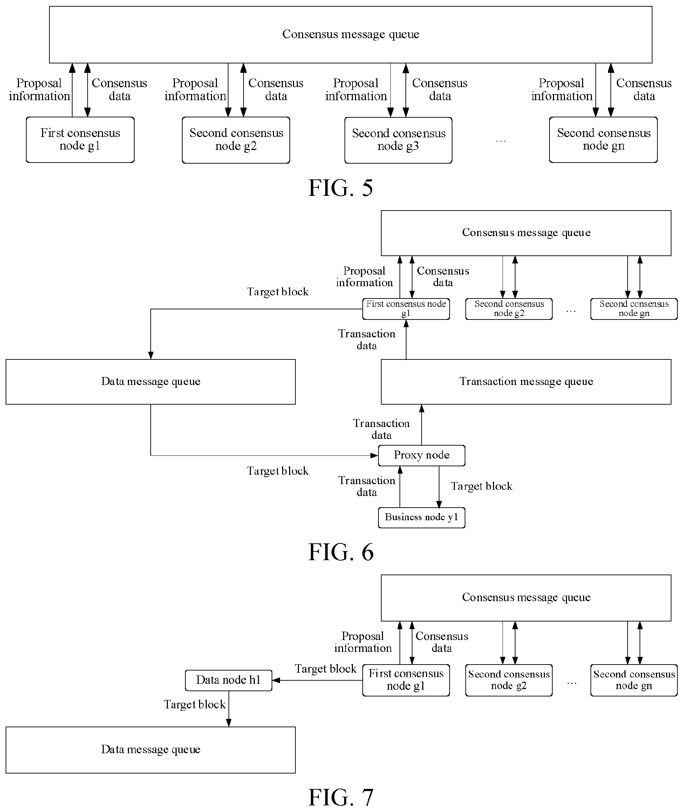

Illustratively, as shown in FIG. 5, the consensus nodes include a first consensus node g1, a second consensus node g2, a second consensus node g3, ..., and a second consensus node gn. The first consensus node g1 transmits the proposal information to the consensus message queue, and the second consensus node g2, the second consensus node g3, ..., and the second consensus node gn read the proposal information from the consensus message queue. The second consensus node g2 transmits the consensus data generated by performing consensus on the target block to the consensus message queue, and the first consensus node g1, the second consensus node g3, ..., and the second consensus node gn read the consensus data from the consensus message queue.

Operation 206: Transmit, in a case that the consensus nodes reach consensus concerning the target block, the target block to a data message queue to cause the service node to read the target block from the data message queue. In embodiments of the present application, operation 206 may include following steps: transmit, in a case that consensus is reached, the target block to a data message queue to cause the business node to read the target block from the data message queue.

The data message queue is a message queue in the distributed message center and is configured for storing the target block on which consensus is performed. The proxy node and the consensus node may perform data interaction with the data message queue. The data message queue may be a one-way write message queue or a one-way read message queue. That is, the target block in the data message queue may be written by the consensus node and read by the proxy node.

In some embodiments, the first consensus node transmits, when determining that the target block reaches consensus, the target block on which consensus is performed to the data message queue. When the target block on which consensus is performed is transmitted to the data message queue, the distributed message center may transmit a subscription message to the proxy node, and the proxy node acquires the target block from the data message queue based on the subscription message and forwards the target block to the service node so that the service node reads the target block. After reading the target block, the service node may update a local account book through the target block.

The first consensus node may perform, when determining that the target block reaches consensus, the upload operation on the target block. That is, the target block in the data message queue is an upload block.

Illustratively, as shown in FIG. 6, a service node y1 in a service network transmits transaction data to a proxy node. The proxy node transmits the transaction data to a transaction message queue of a distributed message center. A first consensus node g1 acquires the transaction data from the transaction message queue, generates proposal information for a target block based on the transaction data, and transmits the proposal information to a consensus message queue of the distributed message center so that second consensus nodes (a consensus node g2,..., a consensus node gn) in a consensus network may acquire the proposal information from the consensus message queue. The consensus nodes perform consensus on the target block based on the proposal information. The consensus nodes perform consensus data interaction with the consensus message queue in a consensus process. The first consensus node g1 transmits, when determining that consensus is reached, the target block on which consensus is performed to a data message queue of the distributed message center. The proxy node acquires the target block from the data message queue and forwards the target block to the service node y1 so that the service node y1 acquires the target block from the data message queue.

In the related art, the proxy node broadcasts the transaction data to the consensus nodes, and the consensus nodes acquire the transaction data in a broadcast manner. In the consensus process, the consensus nodes perform consensus data interaction in a P2P broadcast manner. Consequently, a network connection between the proxy node and each consensus node is complex, and a network connection between the consensus nodes is also complex. The transaction data and the consensus data are frequently broadcast in a complex consensus network, resulting in that broadcasting the transaction data and the consensus data occupies many network resources, thereby affecting the data processing performance of a blockchain network and a transaction response speed.

In the foregoing data processing method for a blockchain, the proxy node does not need to broadcast the transaction data transmitted by the service node to the consensus nodes, but transmits the transaction data to the transaction message queue. The first consensus node acquires the transaction data from the transaction message queue, generates the proposal information of the target block according to the transaction data, and transmits the proposal information to the consensus message queue so that the second consensus nodes may read the proposal information from the consensus message queue. In the consensus process, the consensus nodes perform consensus data interaction through the consensus message queue. Thus, the complexity of the network connection between the proxy node and each consensus node and the complexity of the network connection between the consensus nodes are reduced, network resource consumption caused by broadcasting the transaction data and the consensus data is avoided, the transmission efficiency of the transaction data and the consensus data is improved, and the data processing performance of the blockchain network and the transaction response speed are improved.

In some embodiments, the generating proposal information for a target block based on the transaction data, and transmitting the proposal information to a consensus message queue includes: packaging the transaction data to obtain the target block; and generating the proposal information of the target block, and transmitting the proposal information to the consensus message queue, the proposal information including the target block, a block height of the target block, and node information of the first consensus node generating the target block.

The block height is the number of blocks of the target block on the blockchain, and a position serial number of the target block on the blockchain may be determined through the block height. The block height may not be calculated from 1. For example, if the target block is the 100th block on the blockchain, the block height of the target block may be 99.

The node information of the first consensus node includes but is not limited to: signature information and a node identifier of the first consensus node.

In some embodiments, after acquiring the transaction data, the first consensus node packages the transaction data to obtain a new block, and the new block is the target block. The first consensus node determines the height of the target block according to the number of blocks on the blockchain and acquires the signature information and the node identifier of the first consensus node. The first consensus node generates the proposal information according to the target block, the height of the target block, the signature information and the node identifier of the first consensus node.

In the foregoing embodiment, after acquiring the transaction data from the transaction message queue, the first consensus node generates the proposal information of the target block according to the transaction data to subsequently transmit the proposal information to the consensus message queue so that the consensus nodes read the proposal information from the consensus message queue and perform consensus.

In some embodiments, after the generating proposal information for a target block based on the transaction data, and transmitting the proposal information to a consensus message queue, the method further includes: pre-voting for the target block based on the proposal information to obtain first pre-voting information; acquiring second pre-voting information stored by the second consensus nodes in a first consensus stage from the consensus message queue, and determining first voting information in a second consensus stage based on the second pre-voting information and the first pre-voting information, the second pre-voting information being obtained by the second consensus nodes performing consensuses on the target block based on the proposal information; transmitting the first voting information to the consensus message queue to cause the second consensus nodes to read the first voting information from the consensus message queue, performing consensus on the target block based on the first voting information to obtain second voting information in the second consensus stage, and transmitting the second voting information to the consensus message queue; and acquiring the second voting information in the second consensus stage from the consensus message queue, and determining voting approval information in the second consensus stage based on the first voting information and the second voting information.

This embodiment is a process in which the consensus nodes perform consensus on the target block. The first voting information may be configured for reflecting a result indicating whether the voting in the first consensus stage succeeds or fails. The voting approval information includes the number of approval votes. The consensus data includes but is not limited to: the second pre-voting information, the first voting information, and the second voting information.

In some embodiments, after transmitting the proposal information to the consensus message queue, in response to that the second consensus nodes read the proposal information from the consensus message queue, the first consensus node pre-votes for the target block based on the proposal information to obtain the first pre-voting information. In response to that the second consensus nodes perform consensus on the target block based on the proposal information to obtain the second pre-voting information and transmit the second pre-voting information to the consensus message queue, the first consensus node reads the second pre-voting information from the consensus message queue, determines the first voting information in the second consensus stage according to the second pre-voting information and the first pre-voting information, and transmits the first voting information to the consensus message queue. In response to that the second consensus nodes read the first voting information from the consensus message queue, perform consensus on the target block based on the first voting information to obtain the second voting information in the second consensus stage, and transmit the second voting information to the consensus message queue, the first consensus node acquires the second voting information in the second consensus stage from the consensus message queue and determines the voting approval information in the second consensus stage based on the first voting information and the second voting information.

In some embodiments, the process in which the consensus nodes perform consensus on the target block may include a first consensus stage and a second consensus stage. The first consensus stage and the second consensus stage are voting stages. Next, an example in which the consensus nodes include a first consensus node g1, a second consensus node g2, a second consensus node g3, ..., and a second consensus node gn is used for description.

The first consensus node g1 performs consensus verification on the target block in the proposal information to obtain a consensus verification result. The consensus verification result is that the verification succeeds or the verification fails. The first pre-voting information is determined according to the consensus verification result. When the consensus verification result is that the verification succeeds, the first pre-voting information may be approval information. When the consensus verification result is that the verification fails, the first pre-voting information may be disapproval information.

The second consensus node g2 reads the proposal information from the consensus message queue, performs consensus verification on the target block according to the proposal information to obtain a consensus verification result, and determines the second pre-voting information according to the consensus verification result.

Since the proposal information may include, but is not limited to, the target block, and signature information and a node identifier of a first consensus node generating the target block, the performing consensus verification on the target block according to the proposal information may include, but is not limited to: verifying, according to the node identifier of the first consensus node, validity of the first consensus node, validity of the signature information of the first consensus node, and validity of the Merkle tree root in a block header of the target block.

When determining that the first consensus node generating the target block is valid, the signature information of the first consensus node is valid, and the Merkle tree root in the block header of the target block is valid, the second consensus node g2 determines that the consensus verification result is valid, and then determines that the second pre-voting information is the approval information. When determining that any one of the first consensus node generating the target block, the signature information of the first consensus node, and the Merkle tree root in the block header of the target block is invalid, the second consensus node g2 determines that the consensus verification result is invalid, and then determines that the second pre-voting information is disapproval information.

Verifying the validity of the first consensus node according to the node identifier of the first consensus node generating the target block may be: determining whether the node identifier is in a node committee list, determining, when the node identifier is in the node committee list, that the consensus node generating the target block is in a working state, and then determining that the first consensus node is valid; and determining, when the node identifier is not in the node committee list, that the first consensus node is invalid.

Verifying the validity of the signature information of the first consensus node generating the target block may be: performing signature verification on the signature information according to a public key of the first consensus node, determining, if the signature verification succeeds, that the signature information of the first consensus node is valid, and determining, if the signature verification fails, that the signature information of the first consensus node is invalid. The signature information may be obtained by the first consensus node using its private key encryption.

Verifying the validity of the Merkle tree root in the block header of the target block may be: recalculating the Merkle tree root, determining, when a Merkle tree root obtained through calculation is consistent with the Merkle tree root in the block header of the target block, that the Merkle tree root in the block header of the target block is valid, and determining, when the Merkle tree root obtained through calculation is inconsistent with the Merkle tree root in the block header of the target block, that the Merkle tree root in the block header of the target block is invalid.

The second consensus node g3, ..., and the second consensus node gn may determine the second pre-voting information in the same manner as the foregoing second consensus node g2. The second consensus node g2, the second consensus node g3, ..., and the second consensus node gn transmit the respective second pre-voting information to the consensus message queue. Each consensus node may acquire second pre-voting information of other consensus nodes from the consensus message queue. Certainly, the first consensus node g1 may acquire the second pre-voting information obtained by respective consensus of the second consensus node g2, the second consensus node g3, ..., and the second consensus node gn on the target block from the consensus message queue.

The first consensus node g1 determines the first voting information in the second consensus stage according to the first pre-voting information and the second pre-voting information and transmits the first voting information to the consensus message queue so that the second consensus node g2, the second consensus node g3, ..., and the second consensus node gn acquire the first voting information from the consensus message queue.

When acquiring the first voting information from the consensus message queue, the second consensus node g2 may determine that the first consensus stage is ended, and the second consensus node g2 performs second consensus verification on the target block to obtain the second voting information of the second consensus stage. The process in which the second consensus node g2 performs the second consensus verification on the target block to obtain the second voting information in the second consensus stage is the same as the process in which the second consensus node g2 performs the first consensus verification on the target block to obtain the second pre-voting information in the first consensus stage. The second consensus node g3, ..., and the second consensus node gn also determine the second voting information in the same manner as the foregoing second consensus node g2.

The second consensus node g2, the second consensus node g3, ..., and the second consensus node gn transmit the respective second voting information to the consensus message queue. Each consensus node may acquire second voting information of other consensus nodes from the consensus message queue. Certainly, the first consensus node g1 may further acquire the second voting information obtained by respective consensus of the second consensus node g2, the second consensus node g3, ..., and the second consensus node gn on the target block from the consensus message queue.

The voting approval information in the second consensus stage is the number of approval votes in the second consensus stage. Determining the voting approval information in the second consensus stage based on the first voting information and the second voting information may be that the first consensus node g1 acquires a first preset weight in the first consensus stage and a second preset weight in the second consensus stage and performs weighted summation on the number of approval votes in the first voting information and the second voting information according to the first preset weight and the second preset weight to obtain the voting approval information in the second consensus stage.

The voting approval information (the number of approval votes in the second consensus stage) in the second consensus stage is configured for determining the consensus result of the target block. Illustratively, when the number of approval votes in the second consensus stage is greater than 1/3 of the total number of the consensus nodes, it may be determined that the consensus result of the target block is that consensus is reached. When the number of approval votes in the second consensus stage is not greater than 1/3 of the total number of the consensus nodes, it may be determined that the consensus result of the target block is that consensus is not reached. Illustratively, when the number of approval votes in the second consensus stage is greater than a second preset number of votes, the first consensus node determines that the consensus result of the target block is that consensus is reached. When the number of approval votes in the second consensus stage is not greater than the second preset number of votes, the first consensus node determines that the consensus result of the target block is that consensus is not reached. The second preset number of votes may be set according to actual requirements. For example, the second preset number of votes may be 1/2 of the total number of consensus nodes in the consensus network. The second preset number of votes is not limited in the embodiments of this application.

In a consensus process, some consensus nodes may not be able to perform consensus verification or transmit voting information in time due to a network delay or network disconnection. Consequently, the number of approval votes is relatively low, and reaching consensus is difficult. In the foregoing embodiment, consensus is performed on the target block in two consensus stages. The number of approval votes is determined by combining the voting information in the two consensus stages so that more approval votes may be counted, thereby avoiding a situation in which some consensus nodes cannot transmit voting information due to a network delay or network disconnection, and improving a consensus reaching probability. In addition, data interaction between the consensus nodes is realized through the consensus message queue, thereby avoiding a complex network connection caused by P2P data interaction between the consensus nodes, reducing the network broadcast load, and improving the transmission efficiency of the consensus data. In addition, the consensus message queue may enable more consensus nodes to be accessed without increasing the complexity of the network connection, thereby improving the data processing performance of the blockchain network and the transaction response speed.

In some embodiments, the determining first voting information in a second consensus stage based on the second pre-voting information and the first pre-voting information includes: determining voting approval information in the first consensus stage based on the second pre-voting information and the first pre-voting information; and determining the first voting information in the second consensus stage based on the voting approval information in the first consensus stage.

The voting approval information in the first consensus stage may reflect the number of pieces of approval information in the first consensus stage. A voting result in the first consensus stage may be determined according to the voting approval information of the first consensus node. The voting result in the first consensus stage is "succeed" or "fail".

The first voting information is approval information or disapproval information and may be configured for reflecting that a voting result in the second consensus stage is "succeed" or "fail".

In some embodiments, the first pre-voting information includes approval information or disapproval information, and the second pre-voting information also includes approval information or disapproval information. The first consensus node g1 counts the number of pieces of approval information in the first pre-voting information and the second pre-voting information to obtain the voting approval information in the first consensus stage. When the first consensus node g1 determines that the voting result in the first consensus stage is "succeed" according to the voting approval information in the first consensus stage, the first voting information is the approval information. When the first consensus node g1 determines that the voting result in the first consensus stage is "fail" according to the voting approval information in the first consensus stage, the first voting information is disapproval information.

In some embodiments, the first consensus node g1 determines whether the number of approval votes in the first consensus stage satisfies a "succeed" condition, determines, when the number of approval votes in the first consensus stage satisfies the "succeed" condition, that the voting result in the first consensus stage is "succeed", and then determines that the first voting information is the approval information. The first consensus node g1 determines, when the number of approval votes in the second consensus stage does not satisfy the "succeed" condition, that the voting result in the second consensus stage is "fail", and then determines that the first voting information is disapproval information.

In the foregoing embodiment, the first consensus node determines the voting approval information in the first consensus stage according to the first pre-voting information and the second pre-voting information, and then determines the first voting information in the second consensus stage, so as to subsequently determine the voting approval information in the second consensus stage.

In some embodiments, the voting approval information in the first consensus stage includes the number of pieces of approval information in the first consensus stage. The determining the first voting information in the second consensus stage based on the voting approval information in the first consensus stage includes: determining that the first voting information in the second consensus stage is the approval information when the number of pieces of approval information in the first consensus stage is greater than or equal to a first preset number of votes; and determining that the first voting information in the second consensus stage is disapproval information when the number of pieces of approval information in the first consensus stage is less than the first preset number of votes.

The first preset number of votes may be set according to the total number of consensus nodes in the consensus network. For example, the first preset number of votes may be half of the total number of consensus nodes or 1/3 of the total number of consensus nodes. The value of the first preset number of votes is not limited in the embodiments of this application.

In some embodiments, when the number of pieces of approval information in the first consensus stage is greater than or equal to the first preset number of votes, it may be determined that the number of approval votes in the first consensus stage satisfies the "succeed" condition, and then it may be determined that the first voting information is the approval information. When the number of pieces of approval information in the first consensus stage is less than the first preset number of votes, it is determined that the number of approval votes in the first consensus stage does not satisfy the "succeed" condition, and then it is determined that the first voting information in the second consensus stage is disapproval information.

Illustratively, the first preset number of votes may be 1/3 of the total number of consensus nodes. The first consensus node g1 counts the number of pieces of approval information in the second pre-voting information and the first pre-voting information, determines that the first voting information is the approval information when the number of pieces of approval information is greater than or equal to 1/3 of the total number of consensus nodes in the consensus network, and determines that the first voting information is disapproval information when the number of pieces of approval information is less than 1/3 of the total number of consensus nodes in the consensus network.

In the foregoing embodiment, the first voting information in the second consensus stage is determined according to the quantitative relationship between the number of pieces of approval information in the first consensus stage and the first preset number of votes so that the first voting information is determined according to voting statuses of the consensus nodes, thereby improving the accuracy of the consensus result.

In some embodiments, the determining voting approval information in the second consensus stage based on the first voting information and the second voting information includes: summing the number of pieces of approval information in the first voting information and the second voting information to obtain the voting approval information in the second consensus stage.

The first voting information is approval information or disapproval information, and each piece of second voting information is approval information or disapproval information. The first consensus node g1 counts the number of pieces of approval information in the first voting information and the second voting information, i.e., summing the number of pieces of approval information in the first voting information and the second voting information, to obtain the number of approval votes in the second consensus stage, i.e., the voting approval information in the second consensus stage.

In the foregoing embodiment, the number of pieces of approval information in the first voting information and the second voting information is directly summed to obtain the voting approval information in the second consensus stage, thereby reducing the amount of calculation for determining the voting approval information in the second consensus stage, and improving the efficiency of determining the voting approval information in the second consensus stage.

In some embodiments, the transmitting, in a case that the consensus nodes reach consensus concerning the target block, the target block to a data message queue includes: synchronizing, when the voting approval information in the second consensus stage satisfies a consensus condition, the target block to a data node to cause the data node to transmit the target block to the data message queue.

The voting approval information in the second consensus stage includes the number of approval votes in the second consensus stage. The voting approval information in the second consensus stage satisfying the consensus condition may be that the number of approval votes in the second consensus stage is greater than or equal to the second preset number of votes.

The data node is a node deployed in the consensus network and is configured for synchronizing the target block reaching consensus in the consensus nodes. In actual application, one data node may be connected to a plurality of consensus nodes to synchronize data of the plurality of consensus nodes.

In some embodiments, the process in which the consensus nodes perform consensus on the target block further includes a determining stage. In the determining stage, the first consensus node may determine whether the number of approval votes in the second consensus stage is greater than or equal to the second preset number of votes. When the number of approval votes in the second consensus stage is greater than or equal to the second preset number of votes, the first consensus node determines that the target block reaches consensus. The first consensus node uploads the target block reaching consensus to complete the consensus process. The first consensus node transmits the target block to the data node so that the data node acquires the target block reaching consensus and transmits the target block to the data message queue.

When the data node transmits the target block to the data message queue, the data message queue is written by the data node and read by the proxy node.

Illustratively, as shown in FIG. 7, in a case that the first consensus node g1 determines that the target block reaches consensus, the first consensus node g1 synchronizes the target block to a data node h1, and the data node h1 transmits the target block reaching consensus to the data message queue.

In the foregoing embodiment, when the number of approval votes in the second consensus stage satisfies the consensus condition, the target block is synchronized to the data node so that the data node includes data consistent with that of the consensus node, to back up the data of the consensus node, thereby ensuring the security of the data in the consensus node. The target block is transmitted to the data message queue so that the consensus node does not need to directly perform data interaction with the data message queue, thereby improving the consensus efficiency of the consensus node. In addition, the proxy node may read the target block from the data message queue without acquiring the target block broadcast by the consensus node in a P2P manner, thereby reducing resource consumption caused by broadcasting, reducing the complexity of the network connection between the proxy node and the consensus node, improving the transmission efficiency of the target block reaching consensus, and improving the data processing performance of the blockchain network and the transaction response speed.

In some embodiments, the data processing method for a blockchain further includes: generating, in a case that the consensus nodes reach consensus concerning the target block, a clearing instruction based on the target block; and transmitting the clearing instruction to a distributed message center, the clearing instruction being configured for instructing the distributed message center to clear the transaction data from the transaction message queue. The clearing instruction is configured for clearing the transaction data from the transaction message queue.

In some embodiments, after determining that the target block reaches consensus, the first consensus node performs an upload operation on the target block to generate the clearing instruction corresponding to the target block. The first consensus node transmits the clearing instruction to the distributed message center. The distributed message center clears the transaction data corresponding to the target block according to the clearing instruction corresponding to the target block.

In some embodiments, the clearing instruction may include a data identifier of the transaction data corresponding to the target block, and there is a correspondence between the data identifier and the transaction data. The distributed message center acquires the data identifier in the clearing instruction and clears the transaction data corresponding to the data identifier to clear the transaction data corresponding to the target block.

In the foregoing embodiment, after consensus is reached, the transaction data that does not need to be subsequently processed is cleared from the transaction message queue through the clearing instruction, thereby ensuring a data throughput capability of the message queue in the distributed message center, and improving the data interaction efficiency.

In some embodiments, the data processing method for a blockchain further includes: generating, in a case that the consensus nodes reach consensus concerning the target block, a clearing instruction based on the target block; and transmitting the clearing instruction to the data node to instruct the data node to transmit a first instruction and a second instruction to the distributed message center, the first instruction being configured for clearing the proposal information from the consensus message queue, and the second instruction being configured for clearing the transaction data from the transaction message queue.

In some embodiments, after determining that the target block reaches consensus, the first consensus node performs an upload operation on the target block to generate the clearing instruction corresponding to the target block. The clearing instruction includes a block height of the target block and a data identifier of corresponding transaction data. The first consensus node transmits the clearing instruction to the data node. The data node acquires the block height and the data identifier in the clearing instruction, generates the first instruction according to the block height, and generates the second instruction according to the data identifier. The data node transmits the first instruction and the second instruction to the distributed message center. The distributed message center clears the proposal information from the consensus message queue according to the block height included in the first instruction and clears the transaction data from the transaction message queue according to the data identifier included in the second instruction.

In some embodiments, the first instruction may further be configured for clearing consensus data corresponding to the proposal information in the consensus message queue, i.e., the voting information generated in the consensus process. The data node maintains data in the message queues of the distributed message center so that data that does not need to be subsequently processed in the message queues of the distributed message center may be cleared in time, a data throughput capability of the message queues of the distributed message center may be ensured, and the data interaction efficiency may be improved.

In some embodiments, the data processing method for a blockchain further includes: transmitting a connection request to the distributed message center, the connection request being configured for instructing the distributed message center to perform identity verification based on the connection request; and establishing, in a case that the identity verification succeeds, a data connection with the consensus message queue of the distributed message center.

The connection request is a request transmitted when the first consensus node wants to establish a data connection with the consensus message queue. The identity verification succeeding may reflect that the node transmitting the connection request is a consensus node.

In some embodiments, the distributed message center receives the connection request and performs identity verification based on the connection request. When the identity verification succeeds, the node transmitting the connection request is a consensus node, and the distributed message center establishes the data connection between the consensus node and the consensus message queue.

The distributed message center performing identity verification based on the connection request may be acquiring an identity carried by the connection request and ciphertext information obtained by symmetric encryption, acquiring, by the distributed message center, a symmetric key corresponding to the identity in a pre-stored symmetric key table, decrypting the ciphertext information through the symmetric key, and determining that the identity verification succeeds when the decryption succeeds.

Since each consensus node in the consensus network needs to establish a data connection with the consensus message queue, the second consensus node may transmit the connection request to the distributed message center. When the identity verification succeeds based on the connection request transmitted by the second consensus node, the distributed message center establishes a data connection with the second consensus node.

In the foregoing embodiment, identity verification needs to be performed when the consensus node accesses the consensus message queue. In a case that the identity verification succeeds, the data connection between the consensus node and the consensus message queue is established so that only the consensus node may access the consensus message queue, and further, the data in the consensus message queue may be read only by the consensus node, thereby ensuring the security of data interaction performed by the consensus node through the consensus message queue.

In some embodiments, the connection request includes verification data, and the verification data is obtained by encryption according to a private key of the consensus node. The performing identity verification based on the connection request includes: decrypting the verification data through a pre-acquired public key of the consensus node; and determining, when the decryption succeeds, that the identity verification succeeds.

In some embodiments, the first consensus node transmits the connection request to the distributed message center. The connection request includes verification data obtained by encryption using a private key of the first consensus node. The distributed message center acquires the verification data in the connection request, decrypts the verification data using a public key of the first consensus node, and determines, when the decryption succeeds, that the identity verification succeeds. Further, the distributed message center establishes the data connection between the first consensus node and the consensus message queue. When the decryption is unsuccessful, it is determined that the identity verification fails, and the data connection between the first consensus node and the consensus message queue is not established.

Similarly, the second consensus node may transmit the connection request to the distributed message center. The connection request includes verification data obtained by encryption using a private key of the second consensus node. The distributed message center decrypts the verification data using a public key of the second consensus node, and determines, when the decryption succeeds, that the identity verification succeeds. Further, the distributed message center establishes the data connection between the second consensus node and the consensus message queue. When the decryption is unsuccessful, it is determined that the identity verification fails, and the data connection between the second consensus node and the consensus message queue is not established.

In the foregoing embodiment, the distributed message center decrypts the verification data using the public key of the consensus node to perform identity verification, thereby improving the security of identity verification. Therefore, the data in the consensus message queue may be read only by the consensus node, thereby ensuring the security of data interaction performed by the consensus node through the consensus message queue.

In some embodiments, the data processing method for a blockchain further includes: broadcasting, when a data connection cannot be established with the distributed message center, interaction state information to other consensus nodes in a P2P connection manner to perform data interaction with other consensus nodes in the P2P connection manner.

The interaction state information is configured for indicating that the consensus node cannot establish a data connection with the distributed message center.

In some embodiments, in a case that the consensus node cannot establish a data connection with the distributed message center, the consensus node broadcasts the interaction state information to other consensus nodes in the P2P connection manner. The interaction state information may include the verification data obtained by encryption using the private key of the consensus node. The other consensus nodes may decrypt the verification data using the public key of the consensus node and perform, when the decryption succeeds, data interaction with the consensus node in a P2P broadcast manner.

In the foregoing embodiment, when the consensus node cannot establish a data connection with the distributed message center, the consensus node may perform data interaction with other consensus nodes in the P2P broadcast manner. The data interaction between the consensus nodes is ensured in multiple interaction manners, thereby ensuring that the blockchain network may normally process the transaction data.

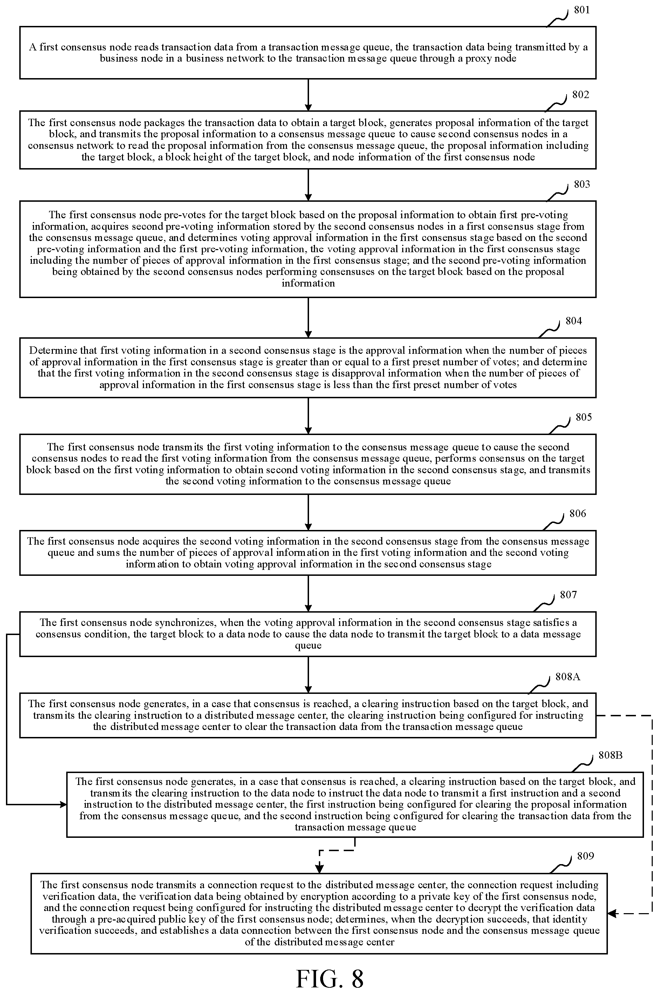

In some embodiments, as shown in FIG. 8, a data processing method for a blockchain includes the following operations.

Operation 801: A first consensus node reads transaction data from a transaction message queue, the transaction data being transmitted by a service node in a service network to the transaction message queue through a proxy node.

Operation 802: The first consensus node packages the transaction data to obtain a target block, generates proposal information of the target block, and transmits the proposal information to a consensus message queue to cause second consensus nodes of the consensus network to read the proposal information from the consensus message queue, the proposal information including the target block, a block height of the target block, and node information of the first consensus node.

Operation 803: The first consensus node pre-votes for the target block based on the proposal information to obtain first pre-voting information, acquires second pre-voting information stored by the second consensus nodes in a first consensus stage from the consensus message queue, and determines voting approval information in the first consensus stage based on the second pre-voting information and the first pre-voting information, the voting approval information in the first consensus stage including the number of pieces of approval information in the first consensus stage; and the second pre-voting information being obtained by the second consensus nodes performing consensuses on the target block based on the proposal information.

Operation 804: Determine that first voting information in a second consensus stage is the approval information when the number of pieces of approval information in the first consensus stage is greater than or equal to a first preset number of votes; and determine that the first voting information in the second consensus stage is disapproval information when the number of pieces of approval information in the first consensus stage is less than the first preset number of votes.

Operation 805: The first consensus node transmits the first voting information to the consensus message queue to cause the second consensus nodes to read the first voting information from the consensus message queue, performs consensus on the target block based on the first voting information to obtain second voting information in the second consensus stage, and transmits the second voting information to the consensus message queue.

Operation 806: The first consensus node acquires the second voting information in the second consensus stage from the consensus message queue and sums the number of pieces of approval information in the first voting information and the second voting information to obtain voting approval information in the second consensus stage.

Operation 807: The first consensus node synchronizes, when the voting approval information in the second consensus stage satisfies a consensus condition, the target block to a data node to cause the data node to transmit the target block to a data message queue.

Operation 808A: The first consensus node generates, in a case that the consensus nodes reach consensus concerning the target block, a clearing instruction based on the target block, and transmits the clearing instruction to a distributed message center, the clearing instruction being configured for instructing the distributed message center to clear the transaction data from the transaction message queue.

Operation 808B: The first consensus node generates, in a case that the consensus nodes reach consensus concerning the target block, a clearing instruction based on the target block, and transmits the clearing instruction to the data node to instruct the data node to transmit a first instruction and a second instruction to the distributed message center, the first instruction being configured for clearing the proposal information from the consensus message queue, and the second instruction being configured for clearing the transaction data from the transaction message queue.

Operation 809: The first consensus node transmits a connection request to the distributed message center, the connection request including verification data, the verification data being obtained by encryption according to a private key of the first consensus node, and the connection request being configured for instructing the distributed message center to decrypt the verification data through a pre-acquired public key of the first consensus node; determines, when the decryption succeeds, that identity verification succeeds, and establishes a data connection between the first consensus node and the consensus message queue of the distributed message center.

Although various operations in the flowcharts involved in the foregoing embodiments are shown sequentially as indicated by the arrows, these operations are not necessarily performed in the order indicated by the arrows. For example, operation 809 may be performed before operation 801. These operations are performed in no strict order unless explicitly stated herein, and these operations may be performed in other orders. Moreover, at least some of the operations in the flowcharts involved in the foregoing embodiments may include a plurality of operations or a plurality of stages. These operations or stages are not necessarily performed at the same time, but may be performed at different times. These operations or stages are not necessarily performed in sequence, but may be performed in turn or in alternation with other operations or at least some of the operations or stages in other operations.

According to the foregoing data processing method for a blockchain, the proxy node does not need to broadcast the transaction data transmitted by the service node to the consensus nodes, but transmits the transaction data to the transaction message queue. The first consensus node acquires the transaction data from the transaction message queue, generates the proposal information of the target block according to the transaction data, and transmits the proposal information to the consensus message queue so that the second consensus nodes may read the proposal information from the consensus message queue. In the consensus process, the consensus nodes perform consensus data interaction through the consensus message queue. Thus, the complexity of the network connection between the proxy node and each consensus node and the complexity of the network connection between the consensus nodes are reduced, network resource consumption caused by broadcasting the transaction data and the consensus data is avoided, the transmission efficiency of the transaction data and the consensus data is improved, and the data processing performance of the blockchain network and the transaction response speed are improved.

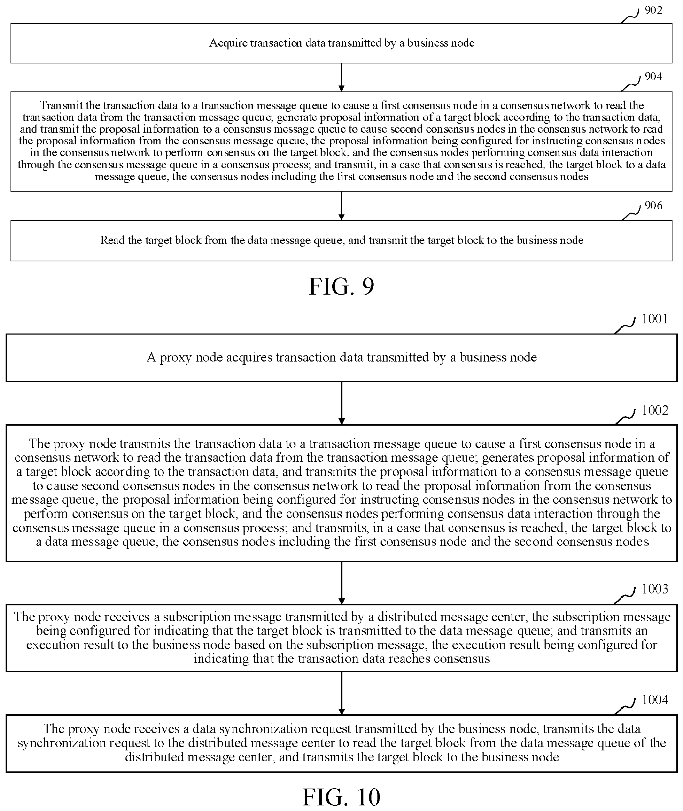

In some embodiments, as shown in FIG. 9, a data processing method for a blockchain is provided. An example in which the method is performed by the proxy node in FIG. 1 is used for description, and the method includes the following operations.

Operation 902: Acquire transaction data transmitted by a service node.

In some embodiments, when the service node needs to upload transaction data to a blockchain network, the service node transmits the transaction data to the proxy node so that the proxy node acquires the transaction data transmitted by the service node.

Operation 904: Transmit the transaction data to a transaction message queue to cause a first consensus node in a consensus network to read the transaction data from the transaction message queue; generate proposal information for a target block based on the transaction data, and transmit the proposal information to a consensus message queue to cause second consensus nodes of the consensus network to read the proposal information from the consensus message queue, the proposal information being configured for instructing consensus nodes in the consensus network to perform consensus on the target block, and the consensus nodes performing consensus data interaction through the consensus message queue in a consensus process; and transmit, in a case that the consensus nodes reach consensus concerning the target block, the target block to a data message queue, the consensus nodes including the first consensus node and the second consensus nodes.

**In** some embodiments, the proxy node transmits the transaction data to the transaction message queue so that the first consensus node reads the transaction data from the transaction message queue. Processes in which the first consensus node reads the transaction data from the transaction message queue, subsequently the consensus nodes perform consensus on the target block, and in a case that the consensus nodes reach consensus concerning the target block, the target block is transmitted to the data message queue are the same as the processes of operation 202 to operation 206 in the foregoing embodiment. Therefore, the processes in which the first consensus node reads the transaction data from the transaction message queue, subsequently consensus is performed on the target block, and in a case that the consensus nodes reach consensus concerning the target block, the target block is transmitted to the data message queue may refer to the descriptions of operation 202 to operation 206 in the foregoing embodiment.

Operation 906: Read the target block from the data message queue, and transmit the target block to the service node.

In some embodiments, when the target block reaching consensus is transmitted to the data message queue, the distributed message center may transmit a subscription message to the proxy node, and the proxy node reads the target block from the data message queue based on the subscription message and forwards the target block to the service node so that the service node acquires the target block. After acquiring the target block, the service node may update a local account book through the target block.

In the foregoing data processing method for a blockchain, the proxy node does not need to broadcast the transaction data transmitted by the service node to the consensus nodes, but transmits the transaction data to the transaction message queue. The first consensus node acquires the transaction data from the transaction message queue, generates the proposal information of the target block according to the transaction data, and transmits the proposal information to the consensus message queue so that the second consensus nodes may read the proposal information from the consensus message queue. In the consensus process, the consensus nodes perform consensus data interaction through the consensus message queue. Thus, the complexity of the network connection between the proxy node and each consensus node and the complexity of the network connection between the consensus nodes are reduced, network resource consumption caused by broadcasting the transaction data and the consensus data is avoided, the transmission efficiency of the transaction data and the consensus data is improved, and the data processing performance of the blockchain network and the transaction response speed are improved.

In some embodiments, a subscription message transmitted by the distributed message center is received. The subscription message is configured for indicating that the target block is transmitted to the data message queue. An execution result is transmitted to the service node based on the subscription message. The execution result is configured for indicating that the transaction data reaches consensus.

The subscription message is configured for indicating that the target block reaching consensus is transmitted to the data message queue.

In some embodiments, after transmitting the transaction data to the transaction message queue, the proxy node subscribes to the data message queue. When the target block reaching consensus is transmitted to the data message queue, the distributed message center transmits the subscription message to the proxy node. The proxy node determines, based on the subscription message, that the transaction data is uploaded, and transmits the execution result including information that transaction data is uploaded to the service node. The transaction data reaching consensus may reflect that the transaction data is uploaded.

In the foregoing embodiment, when the target block is transmitted to the data message queue, the distributed message center transmits the subscription message to the proxy node, and the proxy node transmits the execution result to the service node according to the subscription message so that the service node determines that the transaction data reaches consensus. Data may be quickly read in a subscription manner, thereby improving the data read and write efficiency.

In some embodiments, the reading the target block from the data message queue, and transmitting the target block to the service node includes: receiving a data synchronization request transmitted by the service node; transmitting the data synchronization request to the distributed message center to read the target block from the data message queue of the distributed message center; and transmitting the target block to the service node.

The data synchronization request is configured for reading the target block from the data message queue.

In some embodiments, after transmitting the transaction data to the proxy node, the service node may periodically transmit the data synchronization request to the proxy node. The proxy node transmits the data synchronization request to the distributed message center. When the target block reaching consensus is transmitted to the data message queue, the proxy node may read the target block from the data message queue according to the data synchronization request, and then transmit the target block to the service node.

In some embodiments, after acquiring the execution result, the service node may transmit the data synchronization request to the proxy node. The proxy node transmits the data synchronization request to the distributed message center to read the target block from the data message queue according to the data synchronization request and then transmit the target block to the service node.

In the foregoing embodiment, the proxy node does not need to acquire the target block broadcast by the consensus node in a P2P manner, but reads the target block reaching consensus from the data message queue and then forwards the target block to the service node so that the service node does not need to configure node information of the consensus network, thereby reducing the complexity of the network connection between the proxy node and the consensus node, improving the transmission efficiency of the target block, and improving the data processing performance of the blockchain network and the transaction response speed.

In some embodiments, as shown in FIG. 10, a data processing method for a blockchain includes the following operations.

Operation 1001: A proxy node acquires transaction data transmitted by a service node.

Operation 1002: The proxy node transmits the transaction data to a transaction message queue to cause a first consensus node in a consensus network to read the transaction data from the transaction message queue; generates proposal information for a target block based on the transaction data, and transmits the proposal information to a consensus message queue to cause second consensus nodes of the consensus network to read the proposal information from the consensus message queue, the proposal information being configured for instructing consensus nodes in the consensus network to perform consensus on the target block, and the consensus nodes performing consensus data interaction through the consensus message queue in a consensus process; and transmits, in a case that the consensus nodes reach consensus concerning the target block, the target block to a data message queue, the consensus nodes including the first consensus node and the second consensus nodes.

Operation 1003: The proxy node receives a subscription message transmitted by a distributed message center, the subscription message being configured for indicating that the target block is transmitted to the data message queue; and transmits an execution result to the service node based on the subscription message, the execution result being configured for indicating that the transaction data reaches consensus.

Operation 1004: The proxy node receives a data synchronization request transmitted by the service node, transmits the data synchronization request to the distributed message center to read the target block from the data message queue of the distributed message center, and transmits the target block to the service node.

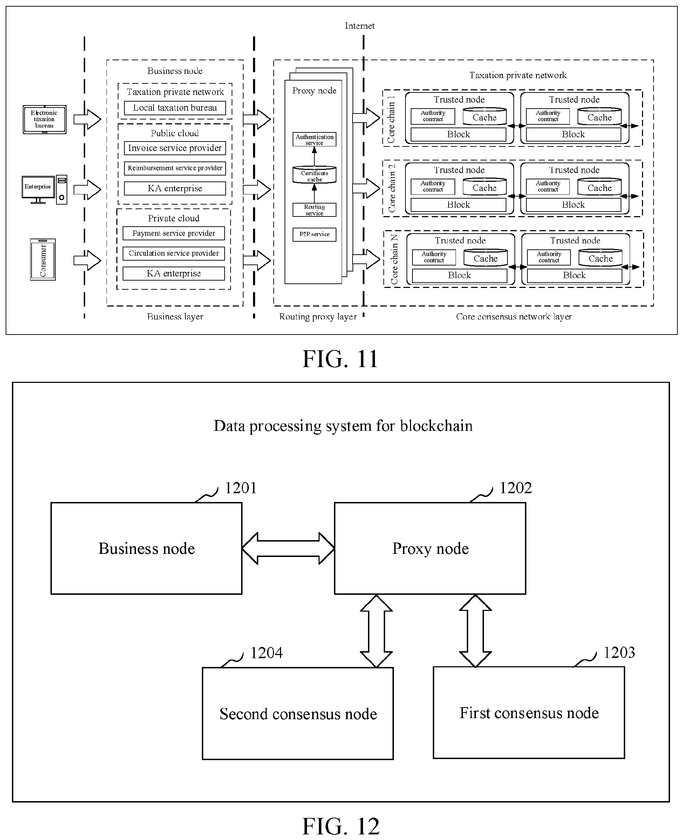

In some embodiments, as shown in FIG. 11, a data processing system for a blockchain is configured to perform the data processing method for a blockchain. The data processing system for a blockchain may be applied to an electronic bill scene.

A business layer corresponds to the service network in the foregoing embodiment, a routing proxy layer includes the proxy node in the foregoing embodiment, and a core consensus network layer corresponds to the consensus network in the foregoing embodiment. The routing proxy layer is configured for forwarding interaction data between the business layer and the core consensus network layer.

In the electronic bill scene, a service node in the business layer may include a terminal device of an electronic taxation bureau, a terminal device corresponding to an enterprise user, and a terminal device corresponding to a consumer. The electronic taxation bureau may be a local taxation bureau in a taxation bureau private network. The enterprise user may be an invoice service provider, a reimbursement service provider, or a key account (KA) enterprise (such as a large-scale retail enterprise) in a public cloud. The consumer may be a payment service provider, a reimbursement service provider, or a retail enterprise in a private cloud. A core chain 1, a core chain 2, ..., and a core chain N are blockchains maintained by taxation bureaus in different regions.

After the consumer has a consumption behavior, the enterprise user invoices the consumption behavior through the corresponding terminal device to generate transaction data.

The proxy node in the routing proxy layer may be configured for performing network isolation on the business layer and the core consensus network layer. The proxy node has P2P services, routing services, certificate caches, and authentication services. The P2P service enables the proxy node to establish a P2P network connection with a proxy node and a consensus node. The routing service enables the proxy node to communicate with a proxy node and a consensus node. A certificate in the certificate cache may be a public key of the service node. The authentication service may decrypt, through the public key, data transmitted by the service node. For example, the transaction data transmitted by the service node may be encrypted through the private key of the proxy node, and the proxy node decrypts the encrypted transaction data through the cached public key so that the transaction data is not easily leaked, and the security of the transaction data is improved. After acquiring the transaction data transmitted by the service node, the proxy node in the routing proxy layer may transmit the transaction data to a transaction message queue of a distributed message center, read, when a target block corresponding to the transaction data reaches consensus, the target block from a data message queue of the distributed message center, and forward the target block to the service node.

The consensus node in the core consensus network layer may be a trusted node (trust structured query language (TrustSQL) node) in the taxation bureau private network. The TrustSQL node has a capability of packaging transaction data to obtain a target block and a consensus capability. The TrustSQL node in the core consensus network layer may acquire the transaction data from the transaction message queue, package the transaction data to obtain the target block, transmit proposal information including the target block to the consensus message queue, perform consensus data interaction with the consensus message queue in a consensus process, upload, in a case that the consensus nodes reach consensus concerning the target block, the target block, and transmit the target block to the data message queue.

Although various operations in the flowcharts involved in the foregoing embodiments are shown sequentially as indicated by the arrows, these operations are not necessarily performed in the order indicated by the arrows. These operations are performed in no strict order unless explicitly stated herein, and these operations may be performed in other orders. Moreover, at least some of the operations in the flowcharts involved in the foregoing embodiments may include a plurality of operations or a plurality of stages. These operations or stages are not necessarily performed at the same time, but may be performed at different times. These operations or stages are not necessarily performed in sequence, but may be performed in turn or in alternation with other operations or at least some of the operations or stages in other operations.

In the foregoing data processing method for a blockchain, the proxy node does not need to broadcast the transaction data transmitted by the service node to the consensus nodes, but transmits the transaction data to the transaction message queue. The first consensus node acquires the transaction data from the transaction message queue, generates the proposal information of the target block according to the transaction data, and transmits the proposal information to the consensus message queue so that the second consensus nodes may read the proposal information from the consensus message queue. In the consensus process, the consensus nodes perform consensus data interaction through the consensus message queue. Thus, the complexity of the network connection between the proxy node and each consensus node and the complexity of the network connection between the consensus nodes are reduced, network resource consumption caused by broadcasting the transaction data and the consensus data is avoided, the transmission efficiency of the transaction data and the consensus data is improved, and the data processing performance of the blockchain network and the transaction response speed are improved.

In some embodiments, as shown in FIG. 12, a data processing system for a blockchain is provided, including a service node 1201 in a service network, a proxy node 1202, and a first consensus node 1203 and a second consensus node 1204 in a consensus network.

The service node 1201 is configured to transmit transaction data to the proxy node.

The proxy node 1202 is configured to acquire the transaction data, and transmit the transaction data to a transaction message queue.

The first consensus node 1203 is configured to read the transaction data from the transaction message queue, generate proposal information for a target block based on the transaction data, and transmit the proposal information to a consensus message queue to cause the second consensus nodes 1204 in the consensus network to read the proposal information from the consensus message queue, the proposal information being configured for instructing consensus nodes in the consensus network to perform consensus on the target block, and the consensus nodes performing consensus data interaction through the consensus message queue in a consensus process; and transmit, in a case that the consensus nodes reach consensus concerning the target block, the target block to a data message queue, the consensus nodes including the first consensus node 1203 and the second consensus nodes 1204.

The proxy node 1202 is further configured to read the target block from the data message queue, and transmit the target block to the service node.

The service node, the proxy node, the first consensus node, and the second consensus node in the data processing system for a blockchain collaboratively perform the data processing method for a blockchain. A specific process in which the service node, the proxy node, the first consensus node, and the second consensus node in the data processing system for a blockchain collaboratively perform the data processing method for a blockchain may refer to descriptions of the data processing method for a blockchain in the foregoing embodiments.

In the foregoing data processing system for a blockchain, the proxy node does not need to broadcast the transaction data transmitted by the service node to the consensus nodes, but transmits the transaction data to the transaction message queue. The first consensus node acquires the transaction data from the transaction message queue, generates the proposal information of the target block according to the transaction data, and transmits the proposal information to the consensus message queue so that the second consensus nodes may read the proposal information from the consensus message queue. In the consensus process, the consensus nodes perform consensus data interaction through the consensus message queue. Thus, the complexity of the network connection between the proxy node and each consensus node and the complexity of the network connection between the consensus nodes are reduced, network resource consumption caused by broadcasting the transaction data and the consensus data is avoided, the transmission efficiency of the transaction data and the consensus data is improved, and the data processing performance of the blockchain network and the transaction response speed are improved.

Based on the same inventive concept, embodiments of this application further provide a data processing apparatus for a blockchain configured to implement the foregoing data processing method for a blockchain. Implementation solutions provided by the apparatus for resolving problems are similar to the implementation solutions described in the foregoing method. Therefore, specific limitations in one or more embodiments of the data processing apparatus for a blockchain provided below may refer to the limitations on the data processing method for a blockchain in the foregoing descriptions. Details are not described herein again.

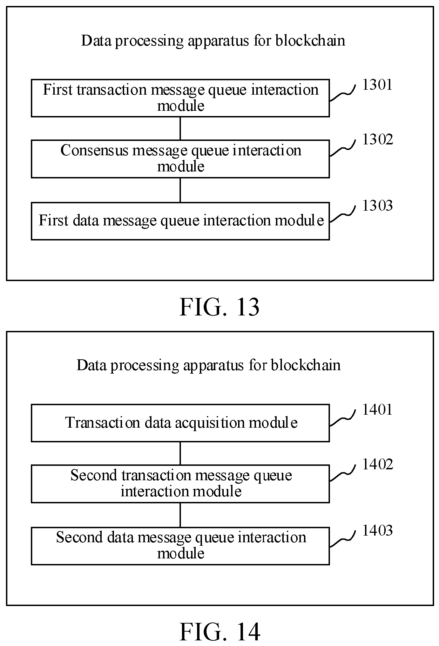

In an embodiment, as shown in FIG. 13, a data processing apparatus for a blockchain is provided, including: a first transaction message queue interaction module 1301, a consensus message queue interaction module 1302, and a first data message queue interaction module 1303.

The first transaction message queue interaction module 1301 is configured to read transaction data from a transaction message queue, the transaction data being transmitted by a service node in a service network to the transaction message queue through a proxy node.

The consensus message queue interaction module 1302 is configured to generate proposal information for a target block based on the transaction data, and transmit the proposal information to a consensus message queue to cause second consensus nodes of the consensus network to read the proposal information from the consensus message queue, the proposal information being configured for instructing consensus nodes in the consensus network to perform consensus on the target block, the consensus nodes performing consensus data interaction through the consensus message queue in a consensus process, and the consensus nodes including the first consensus node and the second consensus nodes.

The first data message queue interaction module 1303 is configured to transmit, in a case that the consensus nodes reach consensus concerning the target block, the target block to a data message queue to cause the service node to read the target block from the data message queue.

In some embodiments, the consensus message queue interaction module 1302 includes:
a block generation unit configured to package the transaction data to obtain the target block; and
a proposal information transmitting unit configured to generate the proposal information of the target block, and transmit the proposal information to the consensus message queue, the proposal information including the target block, a block height of the target block, and node information of the first consensus node generating the target block.

In some embodiments, the consensus message queue interaction module 1302 further includes:
a consensus unit configured to pre-vote for the target block based on the proposal information to obtain first pre-voting information; acquire second pre-voting information stored by the second consensus nodes in a first consensus stage from the consensus message queue, and determine first voting information in a second consensus stage based on the second pre-voting information and the first pre-voting information, the second pre-voting information being obtained by the second consensus nodes performing consensuses on the target block based on the proposal information; transmit the first voting information to the consensus message queue to cause the second consensus nodes to read the first voting information from the consensus message queue, perform consensus on the target block based on the first voting information to obtain second voting information in the second consensus stage, and transmit the second voting information to the consensus message queue; and acquire the second voting information in the second consensus stage from the consensus message queue, and determine voting approval information in the second consensus stage based on the first voting information and the second voting information.

In some embodiments, the consensus unit is configured to determine voting approval information in the first consensus stage based on the second pre-voting information and the first pre-voting information; and determine the first voting information in the second consensus stage based on the voting approval information in the first consensus stage.

In some embodiments, the first data message queue interaction module 1303 is configured to synchronize, when the voting approval information in the second consensus stage satisfies a consensus condition, the target block to a data node to cause the data node to transmit the target block to the data message queue.

In some embodiments, the data processing apparatus for a blockchain further includes:
a clearing module configured to generate, in a case that the consensus nodes reach consensus concerning the target block, a clearing instruction based on the target block; and transmit the clearing instruction to a distributed message center, the clearing instruction being configured for instructing the distributed message center to clear the transaction data from the transaction message queue.

In some embodiments, the data processing apparatus for a blockchain further includes:
a connection module configured to transmit a connection request to the distributed message center, the connection request being configured for instructing the distributed message center to perform identity verification based on the connection request; and establish, in a case that the identity verification succeeds, a data connection with the consensus message queue of the distributed message center.

In an embodiment, as shown in FIG. 14, a data processing apparatus for a blockchain is provided, including: a transaction data acquisition module 1401, a second transaction message queue interaction module 1402, and a second data message queue interaction module 1403.

The transaction data acquisition module 1401 is configured to acquire transaction data transmitted by a service node.

The second transaction message queue interaction module 1402 is configured to transmit the transaction data to a transaction message queue to cause a first consensus node in a consensus network to read the transaction data from the transaction message queue; generate proposal information for a target block based on the transaction data, and transmit the proposal information to a consensus message queue to cause second consensus nodes of the consensus network to read the proposal information from the consensus message queue, the proposal information being configured for instructing consensus nodes in the consensus network to perform consensus on the target block, and the consensus nodes performing consensus data interaction through the consensus message queue in a consensus process; and transmit, in a case that the consensus nodes reach consensus concerning the target block, the target block to a data message queue, the consensus nodes including the first consensus node and the second consensus nodes.

The second data message queue interaction module 1403 is configured to read the target block from the data message queue, and transmit the target block to the service node.

In some embodiments, the second data message queue interaction module 1403 is configured to receive a data synchronization request transmitted by the service node; transmit the data synchronization request to a distributed message center to read the target block from the data message queue of the distributed message center; and transmit the target block to the service node.

In some embodiments, the data processing apparatus for a blockchain includes:
a subscription module configured to receive a subscription message transmitted by the distributed message center, the subscription message being configured for indicating that the target block is transmitted to the data message queue; and transmit an execution result to the service node based on the subscription message, the execution result being configured for indicating that the transaction data reaches consensus.

The various modules in the above-mentioned data processing apparatus for a blockchain may be implemented in whole or in part by software, hardware, and a combination of the two. The above-mentioned modules may be embedded in the form of hardware or stored separately from a processor in a computer device, or may be stored in the form of software in a memory of the computer device, facilitating the processor to invoke the above-mentioned modules to perform the corresponding operations.

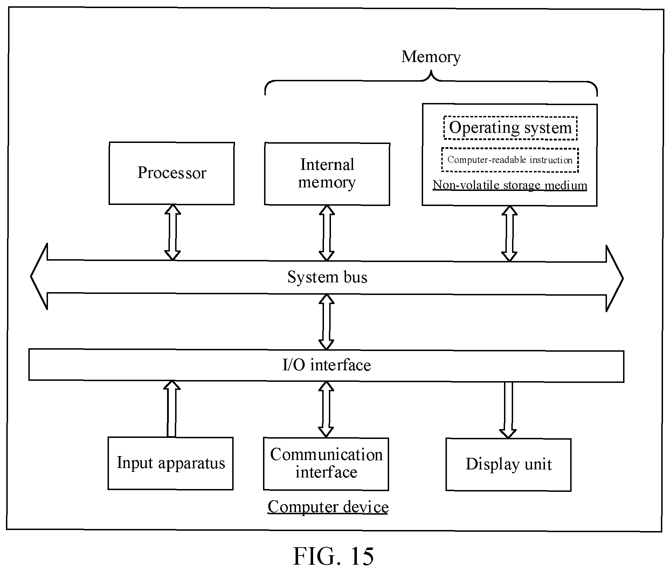

In one embodiment, a computer device is provided. The computer device may be a server, and its internal structure may be shown in FIG. 15. The computer device includes a processor, a memory, an input/output (I/O) interface, and a communication interface. The processor, the memory, and the I/O interface are connected through a system bus, and the communication interface is connected to the system bus through the I/O interface. The processor of the computer device is configured to provide calculation and control capabilities. The memory of the computer device includes a non-volatile storage medium and an internal memory. The non-volatile storage medium stores an operating system, a computer program, and a database. The internal memory provides an environment for running the operating system and the computer program in the non-volatile storage medium. The database of the computer device is configured for storing blocks on a blockchain. The I/O interface of the computer device is configured to exchange information between the processor and an external device. The communication interface of the computer device is configured to communicate with an external terminal through a network connection. The computer program, when executed by the processor, implements a data processing method for a blockchain.

It will be appreciated by a person skilled in the art that the structure shown in FIG. 15 is merely a block diagram of a portion of the structure relevant to the solution of this application and does not constitute a limitation on the computer device to which the solution of this application is applied. A specific computer device may include more or fewer components than those shown in the drawings, a combination of some components, or a different arrangement of components.

In an embodiment, a computer device is provided, including a memory and a processor. The memory has a computer program stored therein, and the processor, when executing the computer program, implements the operations of the foregoing data processing method for a blockchain.

In an embodiment, a computer-readable storage medium is provided, having a computer program stored therein. The computer program, when executed by a processor, implements the operations of the foregoing data processing method for a blockchain.

In an embodiment, a computer program product is provided, including a computer program which, when executed by a processor, implements the operations of the foregoing data processing method for a blockchain.

User information (including, but not limited to, user device information, user personal information, and the like) and data (including, but not limited to, data for analysis, data for storage, data for displaying, and the like) involved in this application are all information and data authorized by users or fully authorized by all parties, and acquisition, use, and processing of relevant data need to comply with relevant laws, regulations, and standards of relevant countries and regions.

A person skilled in the art may understand that all or some of procedures of the method in the foregoing embodiments may be accomplished by instructing the relevant hardware through the computer program. The computer program may be stored on a non-volatile computer-readable storage medium and may include the procedures of the foregoing method embodiments when executed. Any reference to the memory, databases, or other media used in the embodiments provided by this application may include at least one of a non-volatile memory and a volatile memory. The non-volatile memory may include a read-only memory (ROM), a magnetic tape, a floppy disk, a flash memory, an optical memory, a highdensity embedded non-volatile memory, a resistive random access memory (ReRAM), a magnetoresistive random access memory (MRAM), a ferroelectric random access memory (FRAM), a phase change memory (PCM), a graphene memory, etc. The volatile memory may include a random access memory (RAM), an external cache memory, or the like. By way of illustration and not limitation, the RAM may be in a variety of forms, such as a static random access memory (SRAM) or a dynamic random access memory (DRAM). The database involved in various embodiments provided in this application may include at least one of a relational database and a non-relational database. The non-relational database may include a blockchain-based distributed database or the like, but is not limited thereto. The processor involved in various embodiments provided in this application may be a general-purpose processor, a central processing unit, a graphics processing unit, a digital signal processor, a programmable logic device, a data processing logic device based on quantum computing, or the like, but is not limited thereto.

Technical features of the foregoing embodiments may be randomly combined. To make description concise, not all possible combinations of the technical features in the foregoing embodiments are described. However, as long as no conflict exists, the combinations of these technical features shall be considered as falling within the scope recorded by this specification.

The foregoing embodiments show only several implementations of this application, which are described in a relatively specific and detailed manner, but are not to be construed as a limitation of the patent scope of this application. For a person skilled in the art, several transformations and improvements may be made without departing from the idea of this application. These transformations and improvements belong to the protection scope of this application. Therefore, the protection scope of this application shall be subject to the appended claims.

## Claims

1. A data processing method for a blockchain, performed by a first consensus node of a consensus network, and comprising:
reading transaction data from a transaction message queue, the transaction data being transmitted by a service node in a service network to the transaction message queue through a proxy node;
generating proposal information for a target block based on the transaction data, and transmitting the proposal information to a consensus message queue to cause second consensus nodes of the consensus network to read the proposal information from the consensus message queue, the proposal information being configured for instructing consensus nodes in the consensus network to perform consensus on the target block, the consensus nodes performing consensus data interaction through the consensus message queue in a consensus process, and the consensus nodes comprising the first consensus node and the second consensus nodes; and
transmitting, in a case that the consensus nodes reach consensus concerning the target block, the target block to a data message queue to cause the service node to read the target block from the data message queue.

2. The method according to claim 1, wherein the generating proposal information for a target block based on the transaction data, and transmitting the proposal information to a consensus message queue comprises:
packaging the transaction data to obtain the target block; and
generating the proposal information for the target block, and transmitting the proposal information to the consensus message queue, the proposal information comprising the target block, a block height of the target block, and node information of the first consensus node generating the target block.

3. The method according to claim 1 or 2, wherein after the generating proposal information for a target block based on the transaction data, and transmitting the proposal information to a consensus message queue, the method further comprises:
obtaining first pre-voting information for the target block based on the proposal information;
acquiring second pre-voting information stored by the second consensus nodes in a first consensus stage from the consensus message queue, and determining first voting information in a second consensus stage based on the second pre-voting information and the first pre-voting information, the second pre-voting information being obtained by the second consensus nodes performing consensuses on the target block based on the proposal information;
transmitting the first voting information to the consensus message queue to cause the second consensus nodes to read the first voting information from the consensus message queue, performing consensus on the target block based on the first voting information to obtain second voting information in the second consensus stage, and transmitting the second voting information to the consensus message queue; and
acquiring the second voting information in the second consensus stage from the consensus message queue, and determining voting approval information in the second consensus stage based on the first voting information and the second voting information.

4. The method according to claim 3, wherein the determining first voting information in a second consensus stage based on the second pre-voting information and the first pre-voting information comprises:
determining voting approval information in the first consensus stage based on the second pre-voting information and the first pre-voting information; and
determining the first voting information in the second consensus stage based on the voting approval information in the first consensus stage.

5. The method according to claim 4, wherein the voting approval information in the first consensus stage comprises the number of pieces of approval information in the first consensus stage; and
the determining the first voting information in the second consensus stage based on the voting approval information in the first consensus stage comprises:
determining that the first voting information in the second consensus stage is the approval information when the number of pieces of approval information in the first consensus stage is greater than or equal to a first preset number of votes; and
determining that the first voting information in the second consensus stage is disapproval information when the number of pieces of approval information in the first consensus stage is less than the first preset number of votes.

6. The method according to any one of claims 3 to 5, wherein the determining voting approval information in the second consensus stage based on the first voting information and the second voting information comprises:
summing the number of pieces of approval information in the first voting information and the second voting information to obtain the voting approval information in the second consensus stage.

7. The method according to any one of claims 3 to 5, wherein the transmitting, in a case that the consensus nodes reach consensus concerning the target block, the target block to a data message queue comprises:
synchronizing, when the voting approval information in the second consensus stage satisfies a consensus condition, the target block to a data node to cause the data node to transmit the target block to the data message queue.

8. The method according to any one of claims 1 to 7, further comprising:
generating, in a case that the consensus nodes reach consensus concerning the target block, a clearing instruction based on the target block; and
transmitting the clearing instruction to a distributed message center, the clearing instruction being configured for instructing the distributed message center to clear the transaction data from the transaction message queue.

9. The method according to any one of claims 1 to 8, further comprising:
generating, in a case that the consensus nodes reach consensus concerning the target block, a clearing instruction based on the target block; and
transmitting the clearing instruction to the data node to instruct the data node to transmit a first instruction and a second instruction to the distributed message center, the first instruction being configured for clearing the proposal information from the consensus message queue, and the second instruction being configured for clearing the transaction data from the transaction message queue.

10. The method according to any one of claims 1 to 9, further comprising:
transmitting a connection request to the distributed message center, the connection request being configured for instructing the distributed message center to perform identity verification based on the connection request; and
establishing, in a case that the identity verification succeeds, a data connection with the consensus message queue of the distributed message center.

11. The method according to claim 10, wherein the connection request comprises verification data, and the verification data is obtained by encryption according to a private key of the first consensus node; and
the performing identity verification based on the connection request comprises:
decrypting the verification data through a pre-acquired public key of the first consensus node; and
determining, when the decryption succeeds, that the identity verification succeeds.

12. A data processing method for a blockchain, performed by a proxy node of a consensus network, and comprising:
acquiring transaction data transmitted by a service node;
transmitting the transaction data to a transaction message queue to cause a first consensus node in the consensus network to read the transaction data from the transaction message queue; generating proposal information for a target block based on the transaction data, and transmitting the proposal information to a consensus message queue to cause second consensus nodes of the consensus network to read the proposal information from the consensus message queue, the proposal information being configured for instructing consensus nodes in the consensus network to perform consensus on the target block, and the consensus nodes performing consensus data interaction through the consensus message queue in a consensus process; and transmitting, in a case that the consensus nodes reach consensus concerning the target block, the target block to a data message queue, the consensus nodes comprising the first consensus node and the second consensus nodes; and
reading the target block from the data message queue, and transmitting the target block to the service node.

13. The method according to claim 12, wherein the reading the target block from the data message queue, and transmitting the target block to the service node comprises:
receiving a data synchronization request transmitted by the service node;
transmitting the data synchronization request to a distributed message center to read the target block from the data message queue of the distributed message center; and
transmitting the target block to the service node.

14. The method according to claim 12 or 13, further comprising:
receiving a subscription message transmitted by the distributed message center, the subscription message being configured for indicating that the target block is transmitted to the data message queue; and
transmitting an execution result to the service node based on the subscription message, the execution result being configured for indicating that the transaction data reaches consensus.

15. A data processing system for a blockchain, comprising a service node in a service network, a proxy node, and a first consensus node and second consensus nodes of the consensus network;
the service node being configured to transmit transaction data to the proxy node;
the proxy node being configured to acquire the transaction data, and transmit the transaction data to a transaction message queue;
the first consensus node being configured to read the transaction data from the transaction message queue; generate proposal information for a target block based on the transaction data, and transmit the proposal information to a consensus message queue to cause the second consensus nodes of the consensus network to read the proposal information from the consensus message queue, the proposal information being configured for instructing consensus nodes in the consensus network to perform consensus on the target block, and the consensus nodes performing consensus data interaction through the consensus message queue in a consensus process; and transmit, in a case that the consensus nodes reach consensus concerning the target block, the target block to a data message queue, the consensus nodes comprising the first consensus node and the second consensus nodes; and
the proxy node being further configured to read the target block from the data message queue, and transmit the target block to the service node.

16. A data processing apparatus for a blockchain, comprising:
a first transaction message queue interaction module configured to read transaction data from a transaction message queue, the transaction data being transmitted by a service node in a service network to the transaction message queue through a proxy node;
a consensus message queue interaction module configured to generate proposal information for a target block based on the transaction data, and transmit the proposal information to a consensus message queue to cause second consensus nodes of the consensus network to read the proposal information from the consensus message queue, the proposal information being configured for instructing consensus nodes in the consensus network to perform consensus on the target block, the consensus nodes performing consensus data interaction through the consensus message queue in a consensus process, and the consensus nodes comprising a first consensus node and the second consensus nodes; and
a first data message queue interaction module configured to transmit, in a case that the consensus nodes reach consensus concerning the target block, the target block to a data message queue to cause the service node to read the target block from the data message queue.

17. A data processing apparatus for a blockchain, comprising:
a transaction data acquisition module configured to acquire transaction data transmitted by a service node;
a second transaction message queue interaction module configured to transmit the transaction data to a transaction message queue to cause a first consensus node in a consensus network to read the transaction data from the transaction message queue; generate proposal information for a target block based on the transaction data, and transmit the proposal information to a consensus message queue to cause second consensus nodes of the consensus network to read the proposal information from the consensus message queue, the proposal information being configured for instructing consensus nodes in the consensus network to perform consensus on the target block, and the consensus nodes performing consensus data interaction through the consensus message queue in a consensus process; and transmit, in a case that the consensus nodes reach consensus concerning the target block, the target block to a data message queue, the consensus nodes comprising the first consensus node and the second consensus nodes; and
a second data message queue interaction module configured to read the target block from the data message queue, and transmit the target block to the service node.

18. A computer device, comprising a memory and a processor, the memory having computer-readable instructions stored therein, and the computer-readable instructions, when executed by the processor, causing one or more processors to perform operations of the method according to any one of claims 1 to 14.

19. One or more non-volatile readable storage media, having computer-readable instructions stored therein, and the computer-readable instructions, when executed by one or more processors, causing the one or more processors to perform operations of the method according to any one of claims 1 to 14.

20. A computer program product, comprising computer-readable instructions, the computer-readable instructions, when executed by a processor, implementing operations of the method according to any one of claims 1 to 14.
